# EUROPEAN PATENT SPECIFICATION

(11) **EP 0 314 507 B1**
(45) Date of publication and mention of the grant of the patent: **21.01.1998**
(21) Application number: 88310184.2
(22) Date of filing: 28.10.1988
(51) Int. Cl.: H05B 33/20, C09K 11/02

(54) **Pastes for forming a luminescent layer or insulator layer of a dispersion type electroluminescence element and a dispersion type electroluminescence element**
Pasten zur Herstellung einer Lumineszschicht oder einer Isolierungsschicht einer Dispersionselektrolumineszenzvorrichtung und eine Dispersionselektrolumineszenzvorrichtung
Pâte de fabrication d'une couche luminescente ou d'une couche isolante pour élément électroluminescent à dispersion et élément électroluminescent à dispersion

(30) Priority: 30.10.1987 JP 275494/87; 30.10.1987 JP 275495/87; 29.07.1988 JP 190198/88
(43) Date of publication of application: 03.05.1989
(73) Proprietor: NIPPON KASEI CHEMICAL CO., LTD., Iwaki-shi Fukushima-ken (JP)
(72) Inventor: Kameyama, Akinori, Iwaki-shi Fukushima-ken (JP); Wada, Jun, Wako-shi Saitama-ken (JP); Nakabayashi, Yutaka 209 Arashiyama-Rekkusu-Manshon, Kyoto-shi Kyoto-fu (JP)
(74) Representative: Woods, Geoffrey Corlett

(56) References cited:
- DE-A- 1 213 046
- US-A- 4 513 023
- DATABASE DERWENT WORLD PATENT INDEX AN 83-738147; && JP-A-58 115 705 (KUREHA CHEM. IND. K.K.) 09-07-1983

## Description

The present invention relates to a phosphor paste and to a high dielectric paste suitable for forming a luminescent layer and an insulator layer, respectively, of a dispersion type electroluminescence element (hereinafter referred to as a powder EL), to a process for producing a powder EL and to a powder EL having a luminescent layer and an insulator layer.

A powder EL comprises a luminescent layer formed by dispersing a pulverized phosphor for an electroluminescence element (hereinafter referred to as an EL) in a binder made of an inorganic or organic material. The basic structure of a powder EL of an AC driving system comprises an insulator layer and an luminescent layer sandwiched between a back electrode and a transparent electrode across which a sine-wave AC or bipolar pulse voltage is applied so that the luminescent layer is placed under the action of a strong electric field to produce luminescence, which is taken out as light through the transparent electrode. Such a powder EL of an AC driving system includes the ones, though only rarely used, in which a luminescent layer alone is held between the back and transparent electrodes.

The basic structure of a powder EL of a DC driving system comprises a luminescent layer disposed between a back electrode and a transparent electrode across which a monopolar pulse voltage is applied to the luminescent layer under the action of a strong electric field to cause said layer to give out luminescence, which is taken out as light through the transparent electrode. When using an organic material not only for the binder forming the luminescent and insulator layers of the powder EL but also for the transparent electrode and protective layer, it is possible to obtain an element which is small in thickness, light in weight and high in impact strength and which also has good flexibility.

The conventional method for producing said powder EL of an AC driving system comprises (i) applying a pulverized high dielectric paste mainly composed of a pulverized inorganic high dielectric substance such as barium titanate and a solidifiable compound to form a high dielectric paste layer, (ii) applying a phosphor paste mainly composed of a pulverized phosphor for EL and a solidifiable compound to form a phosphor paste layer, and (iii) solidifying said paste layers to form an insulator layer and a luminescent layer. The conventional method for producing a powder EL of a DC driving system comprises (i) applying a pulverized phosphor paste mainly composed of a pulverized phosphor for EL and a solidifiable compound to form a phosphor paste layer, and (ii) solidifying said paste layer to form a luminescent layer. There are only two known ways of effecting said solidification :solvent drying and heat setting.

In the case of the solvent drying type paste, a soluble polymer obtainable by polymerizing a polymerizable monomer such as an acrylic ester or epoxy resin, or a cyanoethylated compound is used as a binder. Cyanoethylated compounds are favorably used as a binder. Cyanoethylated compounds can be obtained by the Michael addition reaction of acrylonitrile with the hydroxyl group in saccharides, polyhydric alcohols or polyols such as hydroxy-containing polymers. Examples of cyanoethylated compounds are cyanoethylated polyvinyl alcohol, cyanoethylated pullulan, cyanoethylated cellulose, cyanoethylated saccharose and cyanoethyl-hydroxyethylated cellulose. Said cyanoethylated compounds are solid or a viscous liquid, so that they need to be dissolved in a solvent for dispersing a pulverized phosphor therein. Examples of solvents are dimethylformamide, N-methylpyrrolidone, methyl ethyl ketone and acetone-dimethylformamide mixture.

In the case of the heat set type paste, an epoxy resin, thermosetting acrylic resin or thermosetting unsaturated polyester resin may, for example, be used as a binder.

In the conventional method for producing a powder EL, as described above, heat drying or heat setting is required to form an insulator layer and a luminescent layer. Such a heating step, either drying or setting, takes about one to two hours. In order to form the insulator layer and luminescent layers of a desired thickness, the application and drying operations or the application and setting operations may need to be repeated several times. Therefore, it is desired to shorten the solidification step. Use of a solvent is unfavorable for the working environment as it involves the danger of fire, explosion or poisoning. Furthermore the cyanoethylated compounds generally used as a binder tend to be tinged when exposed directly to the air at a high temperature for a long time. This reduces the brightness of the light emitted by the EL and changes the colour of the light emitted. To prevent such tinging a vacuum heat drying step is usually employed as it is desirable to dry the paste layer at a low temperature in a short time, but such step proves to be an obstacle to the continuation of EL production lines. Use of a solvent drying type paste is often required combination with the vacuum drying step to perfectly remove the solvent from the insulator and luminescent layers. Vacuum heat drying for more than a full day is necessary for perfect elimination of the residual solvent.

The liquid properties of a paste using a heat set type binder may change greatly with time, posing a problem in its serviceable life. Especially when such a paste is designed to be a short-time hardening type, the hardening temperature may become too high or the liquid properties may become liable to change greatly, making it difficult to obtain an insulator layer of a desired thickness. In some cases, it is necessary to add a solvent to the paste to adjust its viscosity.

As a powder EL using a compound solidifiable by radiation, US-A-4,513,023 discloses "a thin electroluminescent lamp assembly comprising forming a UV curable dielectric matrix by loading non-encapsulated particles of electroluminescent phosphor into a UV curable dielectric composition, depositing a coating of such composition over the surface of a transparent conductor, curing such composition by exposure to ultraviolet light in a substantially inert atmosphere," and "The phosphor particles may be loaded into any conventional UV curable dielectric composition such as, for example, the UV curable dielectric 5011D which is available from the Dupont Co. Inc. of Delaware U.S.A.".
The UV curable dielectric 5011D has a dielectric constant of less than 5 at 1 kHz and 25°C. We have devised a new way of solidification utilizing radiation instead of the conventional solvent-drying or heat setting type solidification techniques in the production of a powder EL. We have found that by using a phosphor paste composed of a pulverized phosphor for EL with an organic high dielectric substance or without an organic high dielectric substance and at least one radiation-solidifiable compound for forming a luminescent layer of a powder EL and a high dielectric paste composed of a high dielectric substance selected from pulverized inorganic high dielectric substances and with an organic high dielectric substance or without an organic high dielectric substances and at least one radiation-solidifiable compound for forming an insulator layer of said EL, it is possible to form easily a luminescent layer and an insulator layer, both of a desired thickness, without using any solvent.

The present invention provides a phosphor paste suitable for forming a luminescent layer of a dispersion type electroluminescence element, which paste has a dielectric constant of not less than 10 at 1 kHz and 25°C after being solidified and which comprises:
(1) a pulverized electroluminescent phosphor; and
(2) at least one compound solidifiable by radiation, said compound having a dielectric constant of not less than 10 at 1 kHz and 25°C after being solidified, the amount of the pulverized electroluminescent phosphor (1) being 150 to 800 parts by weight based on 100 parts by weight of the compound solidifiable by radiation (2), and wherein:
   (A) the compound solidifiable by radiation is a compound (a) selected from a methacrylic ester derivative containing a cyanoalkyl group, an acrylic ester derivative containing a cyanoalkyl group, a methacrylic ester derivative containing a cyanoalkoxyalkyl group, an acrylic ester derivative containing a cyanoalkoxyalkyl group, a methacrylic acid amide derivative containing a cyanoalkyl group and an acrylic acid amide derivative containing a cyanoalkyl group; and the paste comprises
(3) 10 to 100% by weight, based on the compound solidifiable by radiation, of an organic high dielectric substance having a dielectric constant of not less than 10 at 1 kHz and 25°C selected from a cyanoethylated compound, fluoropolymer and nitrile compound; or
   (B) the compound solidifiable by radiation is selected from 2-cyanoethyl (meth)acrylate, 3-cyanopropyl (meth)acrylate, 2-(2-cyanoethoxy)ethyl (meth)acrylate, 2-(2-(2-cyanoethoxy)ethoxy)ethyl (meth)acrylate, 2-hydroxy-3-(2-cyanoethoxy)propyl(meth)acrylate, N-N-bis (2-cyanoethyl) (meth)acrylamide and N-methylol-N-cyanoethyl (meth)acrylamide.

The present invention also provides a dielectric paste suitable for forming an insulator layer of a dispersion type electroluminescence element, which paste has a dielectric constant of not less than 10 at 1 kHz and 25°C after being solidified and which comprises:
(i) at least one compound solidifiable by radiation, said compound having a dielectric constant of not less than 10 at 1 kHz and 25°C after being solidified, wherein:
   (A) the compound solidifiable by radiation is a compound (a) selected from a methacrylic ester derivative containing a cyanoalkyl group, an acrylic ester derivative containing a cyanoalkyl group, a methacrylic ester derivative containing a cyanoalkoxyalkyl group, an acrylic ester derivative containing a cyanoalkoxyalkyl group, a methacrylic acid amide derivative containing a cyanoalkyl group or an acrylic acid amide derivative containing a cyanoalkyl group; and the paste comprises
(ii) 10 to 82.8% by weight, based on the weight of the paste composition, of at least one high dielectric substance having a dielectric constant of not less than 10 at 1 kHz and 25°C selected from a pulverized inorganic high dielectric substance which is barium titanium, lead titanate or strontium titanate, and an organic high dielectric substance which is a cyanoethylated compound, fluoropolymer or nitrile compound; or
   (B) the compound solidifiable by radiation is selected from 2-cyanoethyl (meth)acrylate, 3-cyanopropyl (meth)acrylate, 2-(2-cyanoethoxy)ethyl (meth)acrylate, 2(2-(2-cyanoethoxy)ethoxy)ethyl (meth)acrylate, 2-hydroxy-3-(2-cyanoethoxy)propyl (meth)acrylate, N-N-bis(2-cyanoethyl) (meth)acrylamide and N-methylol-N-cyanoethyl (meth)acrylamide.

The present invention additionally provides a process for producing a dispersion type electroluminescence element which comprises a luminescent layer and an insulator layer disposed between a transparent electrode and a back electrode, which process comprises forming a layer having a dielectric constant of not less than 10 at 1 kHz and 25°C when solidified from a high dielectric paste as defined above, applying a phosphor paste solidifiable by radiation thereto to form a phosphor paste layer, and solidifying the layers with radiation to form the luminescent layer and the insulator layer.

The present invention further provides a process for producing a dispersion type electroluminescence element which comprises a luminescent layer disposed between a transparent electrode and a back electrode, which process comprises forming a phosphor paste layer from a phosphor paste as defined above and solidifying the layer with radiation to form the luminescent layer.

FIG. 1 is a sectional view of a powder EL of an AC driving system of the invention, produced by using a phosphor paste and a high dielectric paste for the luminescent layer and the insulator layer of said EL.

FIG. 2 is a sectional view of a powder EL of a DC driving system of the invention, produced by using a phosphor paste for the luminescent layer of said EL.

### Phosphor paste suitable for forming the luminescent layer

The phosphor paste having a dielectric constant of not less than 10 at 1 kHz and 25°C after being solidified and which is suitable for forming a luminescent layer of a powder EL comprises, as main components, either (a) a pulverized electroluminescent phosphor, an organic high dielectric substance having a dielectric constant of not less than 10 at 1 kHz and 25°C and at least one compound solidifiable by radiation; or (b) a pulverized electroluminescent phosphor and at least one compound solidifiable by radiation, at least one of the solidifiable compounds having a dielectric constant of not less than 10 at 1 kHz and 25°C when solidified.

Any of the generally used EL phosphors in powdery form can be used. For example, a zinc sulfide powder added with an activator such as copper or manganese or a coactivator such as chlorine, bromine or aluminium can be used. Examples of the pulverized phosphor are Type 723, Type 523, Type 727, Type 728 and Type 729 manufactured by GET SILVANIA Inc.

The organic high dielectric substance used in the invention has a dielectric constant of not less than 10 (at 1 kHz and 25°C). Examples are cyanoethylated compounds such as cyanoethylated ethylene-vinyl alcohol copolymer, cyanoethylated polyvinyl alcohol, cyanoethylated dihydroxypoval, cyanoethylated cellulose, cyanoethylated hydroxyalkyl cellulose, cyanoethylated hydroxyethyl cellulose, cyanoethylated pullulan, cyanoethylated dihydroxypullulan, cyanoethylated starch, cyanoethylated saccharose, cyanoethylated amylose, cyanoethylated sorbitol, cyanoethylated pentaerythritol, cyanoethylated mannitol, cyanoethylated methyl glucose, cyanoethylated trimethylolpropane, cyanoethylated glycerin, cyanoethylated diglycerin, cis-3,6-endomethylene Δ⁴ tetra-hydrophthalic acid dicyanoethyl ester, cyanoethylated thioglycol, fluoropolymers such as trifluoroethyl vinyl ether polymer, vinylidene fluoride-hexafluoropropylene copolymer, polyvinylidene fluoride, and nitrile compounds such as succinonitrile, butadiene-acrylonitrile rubber and phthalonitrile. Cyanoethylated compounds are preferred.

As the compound solidifiable by radiation, there can be used in this invention any compound which is solidified upon exposure to radiation. Such compounds may or may not have a high dielectric constant after being solidified. Mixtures of such compounds are also usable.

When the term "solidification" is used, it denotes a state in which a substance is kept solid at 120°C or below.

Examples of said compounds are monomers, oligomers and prepolymers having carbon-carbon double bonds such as (meth)acrylic compounds such as epoxy (meth)acrylate, urethane (meth)acrylate, (meth)acryl-modified polybutadiene, silicon (meth)acrylate, polyester (meth)acrylate, trimethylolpropane tri(meth)acrylate, neopentyl glycol di(meth)acrylate, hexanediol diacrylate, 2-hydroxyethyl (meth)acrylate and 2-methoxyethyl (meth)acrylate, unsaturated polyesters, styrene, vinyl acetate and N-vinylpyrrolidone. These compounds may be mixed in proper combinations. As the compound having a high dielectric constant of not less than 10 at 1 kHz and 25°C after being solidified, and solidifiable by radiation, there are preferably used (meth)acrylic ester derivatives having a cyanoalkyl group such as 2-cyanoethyl (meth)acrylate and 3-cyanopropyl (meth)acrylate, (meth)acrylic ester derivatives having a cyanoalkoxylalkyl group such as 2-(2-cyanoethoxy)ethyl (meth)acrylate, 2-(2-(2-cyanoethoxy) ethoxy)ethyl (meth)acrylate and 2-hydroxy-3-(2-cyanoethoxy) propyl (meth)acrylate, and (meth)acrylic acid amide derivatives having a cyanoalkyl group such as N-N-bis(2-cyanoethyl) (meth)acrylamide and N-methylol-N-cyanoethyl (meth)acrylamide. The term "(meth)acrylate" represents either methacrylate or acrylate.

The term "radiation" used in this invention refers to, for example, an electron beam, or ultraviolet ray. These may be used either singly or in combination. It is possible to apply an ultraviolet ray and an electron beam in that order.

The phosphor paste can be obtained by mixing a pulverized electroluminescent phosphor such as mentioned above, an organic high dielectric substance and at least one compound solidifiable by radiation (which may be a compound which has or does not have a high dielectric constant after being solidified or may be a mixture of such compounds) as binder, well dispersing them and defoaming the mixture (method 1).

Use of an organic high dielectric substance has the advantage of not only increasing the dielectric constant of the binder but also allowing adjustment of the viscosity of the binder to facilitate its application. Said paste is also obtainable by mixing a pulverized electroluminescent phosphor and at least one compound solidifiable by radiation (at least one of the radiation-solidifiable compounds having a high dielectric constant of not less than 10 at 1 kHz and 25°C when solidified) as binder, well dispersing them and defoaming the mixture (method 2).

The phosphor is usually used in an amount of 150 - 800 parts by weight to 100 parts by weight of binder, preferably 250 - 450 parts by weight, more preferably 300 - 400 parts by weight in the case of an AC driving system, and preferably 400 - 750 parts by weight, more preferably 450 - 650 parts by weight in the case of a DC driving system, to 100 parts by weight of binder. The amount of the compound having a high dielectric constant (organic high dielectric substance, compound having a high dielectric constant after being solidified or the sum of said compound and said organic high dielectric substance) in the binder is preferably, 10 to 100% by weight, more preferably 50 to 100% by weight, based on the binder. The amount of the organic high dielectric substance used is preferably 70 to 100 % by weight based on said binder.

Such paste may contain a spacer, a photosensitizer and/or other additives.

A spacer maintains the thickness of the luminescent layer of the EL of an AC driving system constant. Such a spacer is made of, for example, epoxy resin, polystyrene resin, nylon resin or glass. The particle size is from 10 to 50 µm, preferably 20 to 40 µm. The amount of such spacer added is 2% by weight or less, preferably 0.5 to 2.0 % by weight, based on the phosphor such as zinc sulfide.

Examples of the photosensitizer usable in the paste are benzoinisopropyl ether, 1-hydroxy-cyclohexyl-phenyl ketone (Irgacure 184 produced by Ciba Geigy Inc.), 2-hydroxy-2-methyl-1-phenylpropane-1-one(DAROCURE 1173 produced by Merk and Co. Inc.) and benzyldimethylketal (Irgacure 651 produced by Ciba Geigy Inc.).

The amount of such photosensitizer added is usually 0.5 to 5% by weight, preferably 2 to 5 % by weight, based on the radiation-solidifiable compound.

### High dielectric paste suitable for forming an insulator layer

The high dielectric paste suitable for forming an insulator layer of a powder EL comprises, as main components, either (a) at least one high dielectric substance having a dielectric constant of not less than 10 at 1 kHz and 25°C selected from pulverized inorganic high dielectric substances and organic high dielectric substances, and at least one compound solidifiable by radiation; or (b) at least one compound solidifiable by radiation, at least one of the solidifiable compounds having a dielectric constant of not less than 10 at 1 kHz and 25°C after being solidified.

In the paste of composition (a), the compound solidifiable by radiation may or may not have a high dielectric constant (not less than 10 at 1 kHz and 25°) after being solidified. A mixture of such compounds is also usable. In the paste of composition (b), there can be used a single compound having a high dielectric constant after being solidified and solidifiable by radiation, or a mixture of such a compound with another compound not having a high dielectric constant after being solidified but which is also solidifiable by radiation.

The paste of composition (a) can be obtained by mixing and well dispersing a high dielectric substance in a radiation-solidifiable compound and defoaming the mixture. The paste of composition (b) can be obtained by simply defoaming a radiation-solidifiable compound or a mixture of such compounds.

As the pulverized inorganic high-dielectric substance, there can be used those which have been commonly employed in the art, but barium titanium, lead titanate and strontium titanate are preferred. As for the organic high dielectric substance and radiation-solidifiable compound, those employed in the phosphor paste suitable for forming a luminescent layer can be used. The inorganic high dielectric substance is usually used in an amount of 200 to 700 parts by weight, preferably 300 to 500 parts by weight to 100 parts by weight, of the binder. The ratio of the dielectric substance (inorganic or organic high dielectric substance or the total of such substance and the compound having a high dielectric constant after being solidified) in the whole paste composition is preferably 10 to 100% by weight, more preferably 50 to 100% by weight. The amount of the organic high dielectric substance used is preferably 70 to 100 % by weight based on the binder.

Such a paste may contain a suitable amount of a sensitizer as in the paste suitable for forming a luminescent layer as described above. The amount of such sensitizer is usually 0.5 to 5% by weight, preferably 3 to 5 % by weight, based on the radiation-solidifiable compound.

### Powder EL

According to the present invention, a powder EL is formed by using said pastes for forming a luminescent layer and an insulator layer and by adopting a mode of solidification using radiation instead of the conventional solvent-drying or heat setting type solidification techniques.

Examples of the processes for producing a powder EL of the invention are described below with reference to the accompanying drawings.

FIG. 1 illustrates a powder EL having a structure in which a luminescent layer and an insulator layer are disposed between a transparent electrode and a back electrode. To make such an EL, first a high dielectric paste is coated on a back electrode 1 having an extended-out terminal 7. The coating is solidified by applying radiation thereto to form an insulator layer. The thickness of this insulator layer is 5 to 50 µm, preferably 10 to 40 µm.

The amount of radiation used for solidifying said coating is preferably 1 to 10 megarads in the case of an electron beam and preferably 1,000 to 10,000 millijoules/cm² in the case of an ultraviolet ray.

Then a phosphor paste is coated on said insulator layer 3 to form a luminescent layer. After coating, a transparent electrode having an extended-out terminal 8 is attached to the paste layer using pressure. This transparent electrode comprises a synthetic resin film 2 having deposited on one side thereof a conductive transparent film 2'. It is attached to the paste layer using pressure so that its conductive transparent film side is bonded to the paste layer.

The laminate is then irradiated via its transparent electrode side and solidified. The thickness of the luminescent layer is 5 to 50 µm, preferably 10 to 40 µm.

The amount of radiation used for the above treatment is preferably 1 to 10 megarads in the case of an electron beam and preferably 1,000 to 10,000 millijoules/cm² in the case of an ultraviolet ray.

After solidification, the laminate is adhered with a synthetic resin film 5 such as a nylon film, with the external lead wire left extended out, to ensure waterproofness and adhesion, and is futhermore sealed in its entirety with a fluorine resin film 6.

FIG. 2 illustrates a powder EL having a structure in which a luminescent layer alone is disposed between a transparent electrode and a back electrode. In this case, a phosphor paste suitable for forming a luminescent layer is applied on a back electrode 1 having an extended-out terminal 7 to form a paste layer, and then a transparent electrode comprising a synthetic resin film 2 having deposited thereon an conductive transparent film 2' having an extended-out terminal 8 is attached to said paste layer using pressure so that the conductive transparent film 2' side is bonded to said paste layer. The laminate is then irradiated from its transparent electrode 2 side and solidified to form a luminescent layer. The thickness of this luminescent layer is 5 to 50 µm, preferably 10 to 30 µm. The laminate is then adhered with a synthetic resin film 5, with the external lead wire left extended out, to ensure waterproofness and adhesion, and is furthermore sealed in its entirety with a fluorine resin film 6.

In the processes for producing a powder EL by changing the type of the phosphor paste forming the luminescent layer and the type of the high dielectric paste forming the insulator layer, choice may be made from the following: (A) combinetion of phosphor paste (a) and high dielectric paste (a) ; (B) combination of phosphor paste (a) and high dielectric paste (b) ; (C) combination of phosphor paste (b) and high dielectric paste (a) ; and (D) combination of phosphor paste (b) and high di-electric paste (b) in the case of the structure of FIG. 1. In the case of FIG. 2, choice may be made from the following : (E) use of phosphor paste (a) and (F) use of phosphour paste (b).

In case of using as the back electrode 1 a transparent electrode, for example, a polyethylene terephthalate film having deposited on one side thereof an IT0 film (indium oxide/tin oxide film), there can be obtained a powder EL capable of both sides luminescence.

The high dielectric paste layer and phosphor paste layer can be solidified by a single exposure to radiation, especially when using an electron beam, to form an insulator layer and a luminescent layer, respectively.

Further, the phosphor paste suitable for forming a luminescent layer and the high dielectric paste suitable for forming an insulator layer in a powder EL can be coated to a desired thickness by an appropriate coating method such as spin coating, doctor blade coating or screen printing. This allows a step reduction.

The back electrode, transparent electrode, activator, coating material and sealing material used in the present invention are not subjected to any specific limitations; it is possible to use those known and employed in the art.

The powder EL obtained as described above according to this invention produce a high luminance, preferably a luminance of more than 20 cd/m², when an AC (100 V, 400 Hz) or DC (100 V) voltage is applied to the terminals thereof.

The pulverized high dielectric substance paste and pulverized phosphor paste suitable for forming an insulator layer and a luminescent layer in a powder EL according to this invention have a high dielectric constant of not less than 10 at 1 kHz and 25°C after being solidified. Thus the powder EL has a high luminance. Using the present invention it is possible to reduce markedly the time required for producing the EL, without the danger of fire, explosion or poisoning which was involved in use of a solvent, and to form easily an insulator layer and a luminescent layer of a desired thickness. In the case of the conventional solvent-drying type pastes, when a single coating thickness is too large, foaming or slackening due to the solvent would occur making it hard to obtain flat and smooth insulator and/or luminescent layers. The present invention eliminates this problem.

### Examples

The present invention is now further described in the following Examples.

### Example 1

360 g of a pulverized phosphor for EL comprising zinc sulfide added with an activator such as copper was mixed and well dispersed in 100 g of 2-(2-cyanoethoxy)ethyl acrylate (dielectric constant after being solidified ε = 30 (at 1 kHz and 25°C), which is a monomer solidifiable by irradiation with an electron beam, and the mixture was defoamed. 1 g of epoxy beads were then dispersed as a spacer in the suspension to prepare a phosphor paste suitable for forming a luminescent layer of a powder EL.

### Example 2

730 g of a pulverized phosphor for EL comprising zinc sulfide as a base material added with manganese as an activator and further subjected to copper treatment on the surface was mixed and well dispersed in 100 g of 2-(2-cyanoethoxy)ethyl acrylate, which is a binder monomer solidifiable by irradiation with an ultraviolet ray. To the mixture was then added 2 g of a photosensitizer (Irgacure 651 (trademark) produced by Ciba Geigy Inc.), and the mixture was stirred for further mixing and defoamed to prepare a phosphor paste suitable for forming a luminescent layer in a powder EL.

### Example 3

360 g of a pulverized phosphour for EL comprising zinc sulfide added with an activator such as copper was mixed and well dispersed in 100 g of 2-(2-cyanoethoxy)ethyl acrylate, a monomer solidifiable by irradiation with an ultraviolet ray, followed by addition of 2 g of a photosensitizer (Irgacure 651), stirring and defoaming. 1 g of epoxy beads were then dispersed as a spacer in the suspension to prepare a phosphor paste suitable for forming a luminescent layer of a powder EL.

### Example 4

360 g of a pulverized phosphour for EL comprising zinc sulfide added with an activator such as copper, 50 g of 2-(2-cyanoethoxy)ethyl acrylate which is a binder monomer solidifiable by irradiation with an electron beam, and 50 g of 2-cyanoethyl acrylate (dielectric constant after being solidified ε = 17 (at 1 kHz and 25°C) were mixed and dispersed well, followed by further dispersion therein of 2 g of a photosensitizer (Irgacure 651) and 1 g of epoxy beads as a spacer. The suspension was then defoamed to prepare a phosphor paste suitable for forming a luminescent layer of a powder EL.

### Example 5

730 g of the pulverized phosphour for EL used in Example 2 and 10 g of cyanoethylated polyvinyl alcohol (dielectric constant ε = 20, at 1 kHz and 25°C) were mixed and well dispersed in 90 g of 2-(2-cyanoethoxy)ethyl acrylate, followed by further addition of 2 g of a photosensitizer (Irgacure 651), stirring and defoaming to prepare a phosphor paste suitable for forming a luminescent layer of a powder EL.

### Example 6

360 g of the pulverized phosphor for EL used in Example 1 was mixed with 100 g of 2-cyanoethyl acrylate and 10 g of neopentyl glycol diacrylate and well dispersed, followed by defoaming. In this suspension were dispersed 1 g of epoxy beads as a spacer and 2 g of Irgacure 651 as a photosensitizer to prepare a phosphor paste suitable for forming a luminescent layer of a powder EL.

### Example 7

360 g of the pulverized phosphor for EL used in Example 1 and 20 g of cyanoethylated pullulan ( ε = 19 at 1 kHz and 25°C) were mixed and well dispersed in 100 g of 2-cyanoethyl acrylate and 10 g of trimethylolpropane triacrylate, followed by defoaming. In this suspension were mixed 1 g of epoxy beads as a spacer and 2 g of Irgacure 651 to prepare a phosphor paste suitable for forming a luminescent layer of a powder EL.

### Example 8

450 g of pulverized barium titanate was mixed and well dispersed in 100 g of 2-(2-cyanoethoxy)ethyl acrylate, which is a binder monomer solidifiable by irradiation with an electron beam. The suspension was defoamed to prepare a high dielectric paste suitable for forming an insulator layer of a powder EL.

### Example 9

400 g of pulverized barium titanate was mixed and well dispersed in 100 g of 2-(2-cyanoethoxy)ethyl acrylate solidifiable by irradiation with an ultraviolet ray. The suspension was further mixed with 2 g of Irgacure 651 as a photosensitizer, stirred and defoamed to prepare a high dielectric paste suitable for forming an insulator layer of a powder EL.

### Example 10

450 g of pulverized barium titanate, 50 g of 2-(2-cyanoethoxy)ethyl acrylate, which is a binder monomer solidifiable by irradiation with an electron beam, and 50 g of 2-cyanoethyl acrylate were mixed, well dispersed and defoamed to produce a high dielectric paste suitable for forming an insulator layer of a powder EL.

### Example 11

450 g of pulverized barium titanate was mixed with 80 g of 2-(2-cyanoethoxy)ethyl acrylate and 20 g of neopentyl glycol diacrylate, well dispersed and then defoamed to prepare a high dielectric paste suitable for forming an insulator layer of a powder EL.

### Example 12

400 g of pulverized barium titanate and 10 g of cyanoethylated polyvinyl alcohol were mixed and well dispersed in 90g of 2-(2-cyanoethoxy)ethyl acrylate, followed by further mixing of 2 g of Irgacure 651 and defoaming to prepare a high-dielectric paste suitable for forming an insulator layer of a powder EL.

### Example 13

450 g of pulverized barium titanate and 30 g of cyanoethylated saccharose (ε = 35, at 1 kHz and 25°C) were mixed and well dispersed in 80 g of 2-(2-cyanoethoxy)ethyl acrylate and 20 g of trimethylolpropane triacrylate, and the suspension was then defoamed to prepare a high-dielectric paste suitable for forming an insulator layer of a powder EL.

### Example 14

2 g of Irgacure 651 was mixed in 100 g of 2-(2-cyanoethoxy)ethyl acrylate and mixture was defoamed to prepare a high dielectric paste suitable for forming an insulator layer of a powder EL.

Some examples of powder EL using the high dielectric pastes and phosphor pastes of the present invention are shown below.

### Example 15

The following reference numbers refer to Fig. 1 of the accompanying drawings. An 80 µm thick aluminium sheet was used as a back electrode 1, and a 100 µm thick polyethylene terephthalate film 2 having an ITO film 2' deposited on one side thereof was used as a transparent electrode. 2-(2-cyanoethoxy)ethyl acrylate was used as a binder monomer solidifiable by irradiation with an electron beam. A high dielectric paste for forming an insulator layer of a powder EL prepared by mixing and well dispersing 100 g of said binder monomer in 450 g of pulverized barium titanate and defoaming the mixture (paste of Example 8) was spin coated on the back electrode 1 having an extended-out terminal 7 to form a high dielectric paste layer. The laminate was then irradiated with an electron beam (irradiation time being less than one second) by an electron beam irradiator CB-150/15/10L of ESI Inc. under the condition of 3 mA by adjusting the conveyor speed so that the irradiation dose was 5 megarads, thereby solidifying the binder monomer to form an insulator layer 3. The thickness of this layer was 30 microns. A phosphour paste for forming a luminescent layer of a powder EL obtained by mixing and well dispersing 360 g of a pulverized phosphor for EL comprising zinc sulfide added with an activator such as copper in 100 g of said binder monomer, defoaming the suspension and further dispersing therein 1 g of epoxy beads as a spacer (paste of Example 1) was then spin coated on said insulator layer 3 to form a phosphor paste layer. Then a transparent conductive film 2 having an extended-out terminal 8 was attached to said phosphor paste layer using pressure in such a way that no air bubbles were trapped in the bonded areas of the transparent electrode and paste layer. The laminate was then irradiated with an electron beam (irradiation time being less than one second) by using said electron beam irradiator CB 150/15/10L of ESI Inc. under the condition of 3 mA by adjusting the conveyor speed so that the irradiation dose was 5 megarads, thereby solidifying the binder monomer to form a luminescent layer 4. The laminate was subsequently adhered with a nylon 6/nylon 12 composite film 5, with the lead wire left extended out, to ensure waterproofness and adhesion, and further sealed entirely with a fluorine resin film 6. This powder EL produced a high luminance of 150 cd/m² when an AC voltage of 100 V and 400 Hz was applied thereto.

### Example 16

The following reference numbers refer to Fig. 1. A 100 µm thick aluminium sheet was used as a back electrode 1, and a 90 µm thick polyethylene terephthalate film 2 having an ITO film 2' deposited on one side thereof was used as a transparent electrode. 2-(2-cyanoethoxy)ethyl acrylate was used as a binder monomer solidifiable by irradiation with ultraviolet rays. A high dielectric paste for forming an insulator layer of a powder EL was prepared by mixing and well dispersing 400 g of pulverized barium titanate in 100 g of said binder monomer, further mixing 2 g of Irgacure 651 as photosensitizer and vacuum-defoaming the mixture (paste of Example 9). This paste was spin coated on said aluminium sheet constituting the back electrode 1 having an extended-out terminal 7 to form a paste layer of pulverized high dielectric substance. Then the laminate was irradiated with ultraviolet rays from a 4 kW metal halide lamp for 10 seconds, thereby solidifying the binder monomer to form an insulator layer 3 having a thickness of 15 µm. A phosphor paste for forming a luminescent layer of a powder EL was then prepared by mixing and well dispersing 360 g of a pulverized phosphor for EL comprising zinc sulfide added with an activator such as copper in 100 g of said binder monomer, further mixing 2 g of Irgacure 651 as photosensitizer, defoaming the suspension and further dispersing therein 1 g of epoxy beads as a spacer (paste of Example 3). This paste was spin coated on said insulator layer 3 to form a phosphor paste layer. A conductive transparent film 2 constituting a transparent electrode having an extended-out terminal 8 was attached to said paste layer using pressure in such a way that no air bubbles were trapped in the bonded areas of said transparent electrode and paste layer. The laminate was then irradiated via its transparent electrode side with ultraviolet rays from a 4 kW metal halide lamp for 10 seconds, thereby solidifying the binder monomer to form a luminescent layer 4. The thickness of this luminescent layer was 30 µm. The laminate was coated with a nylon 6-nylon 12 composite film 5, with the external lead wires (7, 8) being left extended out, to ensure waterproofness and adhesion, and further sealed entirely with a fluorine resin film 6. This powder EL exhibited a high luminance of 500 cd/m² when an AC voltage of 100 V and 400 Hz was applied thereto.

### Example 17

The following reference numbers refer to Fig. 2. A 200 µm thick aluminium sheet was used as back electrode 1, and a 120 µm thick polyethylene terephthalate film 2 having an ITO film (indium oxide/tin oxide film) formed on one side thereof was used as a transparent electrode. A phosphor paste was prepared by adding 730 g of Cu surface treated ZnS:Mn phosphor to 100 g of 2-(2-cyanoethoxy) acrylate, which is a light-solidifiable binder monomer, stirring the mixture to effect good dispersion, further adding 2 g of Irgacure 651 as photosensitizer, stirring the mixture and then defoaming it (paste of Example 2). This paste was spin coated on the back electrode 1 having an extended-out terminal 7 to form a phosphor paste layer, and an conductive transparent film 2 having an extended-out terminal 8 was attached to said paste layer using pressure in such a manner that no air bubbles were left in the bonded areas. Then the laminate was irradiated via its transparent electrode side with ultraviolet rays from a metal halide lamp for 18 seconds, thereby solidifying the binder monomer to form a luminescent layer having a thickness of 30 µm. The laminate was then coated with a nylon 6/nylon 12 composite film 5, with the external lead wires (7, 8) being left extended out, to ensure waterproofness and adhesion, and sealed entirely with a fluorine resin film 6. The thus obtained EL was subjected to approximately 3-hour forming by applying a DC voltage to the electrodes of the EL and increasing the voltage gradually from 30 V to 100 V. The emitted orange-colored light luminance increased gradually with progress of forming, finally reaching 68 cd/m² with the application of a 100 V DC voltage.

### Example 18

A high dielectric paste for forming an insulator layer was prepared by mixing and well dispersing 450 g of pulverized barium titanate in 100 g of binder composed of 80 parts by weight of 2-(2-cyanoethoxy)ethyl acrylate, 20 parts by weight of cyanoethylated polyvinyl alcohol and 10 parts by weight of trimethylolpropane triacrylate. A phosphor paste for forming a luminescent layer was also prepared by mixing and well dispersing 360 g of a pulverized phosphor for EL comprising zinc sulfide added with an activator such as copper in 100 g of said binder, defoaming the suspension and further dispersing therein 1 g of epoxy beads as a spacer.

By using said high dielectric paste and phosphor paste, there was produced a powder EL in the same way as Example 15 except that said pastes were coated on the back electrode and the insulator layer, respectively, by screen printing. This powder EL displayed a high luminance of 130 cd/m² on application of a AC voltage of 100 V and 400 Hz.

### Examples 19 - 23

Powder ELs were produced by following the same procedure as Example 18 except that in forming the high dielectric paste and phosphor paste, there were used 80 parts by weight of N-bis(2-cyanoethyl) acrylamide (Example 19), 3-cyanopropyl acrylate (Example 20), 2-(2-(2-cyanoethoxy)ethoxy)ethyl metacrylate (Example 21), 2-hydroxy-3-(2-cyanoethoxy)propyl acrylate (Example 22) and 2-hydroxy-3-(2-cyanoethoxy)propyl metacrylate (Example 23) in place of 80 parts by weight of 2-(2-cyanoethoxy)ethyl acrylate.

These powder ELs showed the following luminances when AC voltages of 100 V and 400 Hz were applied thereto.

| | | | | | |
|---|---|---|---|---|---|
| Example | 19 | 20 | 21 | 22 | 23 |
| Luminance (cd/m²) | 20 | 20 | 60 | 90 | 50 |

### Examples 24 and 25

A powder EL was obtained by following the procedure of Example 18 except that the paste of Example 14 was used as the high dielectric paste for forming an insulator layer (Example 24).

There was also produced a powder EL by following the procedure of Example 15 except that the paste of Example 14 was used as the high dielectric paste for forming an insulator layer, and that the paste of Example 1 was used as the phosphor paste for forming a luminescent layer. (Example 25).
These powder ELs showed the following luminances when AC voltages of 100 V and 400 Hz were applied thereto.

| | | |
|---|---|---|
| Example | 24 | 25 |
| Luminance (cd/m²) | 130 | 150 |

### Example 26

A powder EL was produced in the same way as Example 17 except for using the paste of Example 5 as the phosphor paste for forming a luminescent layer. This EL was subjected to 3-hour forming by applying an AC voltage to the electrodes of the EL and increasing the voltage gradually from 30 V to 100 V. The emitted orange-colored light luminance increased steadily with progress of forming, finally reaching 68 cd/m² when a DC voltage of 100 V was applied.

Syntheses of the compounds solidifiable by exposure to radiation and having a high dielectric constant after being solidified are illustrated below.

### Synthesis Example 1

58 g of 2-hydroxyethyl acrylate, 132.5 g of acrylonitrile and 3.8 g of 1,8-diazabicyclo(5,4,0)undece-7-ene were supplied into a 500 ml four-necked flask equipped with a stirrer, a condenser and a thermometer and were reacted under stirring at 25°C. The reaction solution was transferred into a 500 ml separating funnel, added with 50 g of pure water and shaken well, followed by removal of the aqueous layer. This operation was repeated three times. To the organic layer was added tetrakis(methylene-3-(3,5-di-tert-butyl-4-hydroxyphenyl)propionate)methane as antioxidant in an amount of 1% based on the weight of the organic layer, followed by distillation under reduced pressure of 5 mmHg. The objective compound 2-(2-cyanoethoxy)ethyl acrylate was obtained at the distillation temperature of 120°C. The dielectric constant ε of this compound, as measured at 1 kHz and 25°C in a polymer state, was 30.

### Synthesis Example 2

50 g of acrylamide and 200 g of acrylonitrile were supplied into a 1-litre four-necked round flask provided with a stirrer, a condenser and a thermometer. Then 20 g of a methanol solution containing 0.54 g of sodium methylate was added dropwise over a period of 1.5 hours while maintaining the inside temperature of the flask below 10°C. Then the mixture was stirred for 2 hours to carry out the reaction. The reaction solution was added into 500 ml of a 0.3N acetic acid solution under stirring. The mixed solution was transferred into a separating funnel and the organic layer was separated. The organic layer was dried over anhydrous sodium sulfate and then the excess acrylonitrile, unreacted acrylamide and by-produced methylcyanoethyl ether were distilled off under reduced pressure. The residue was cooled to obtain a yellow wax-like solid. It was recrystallized from benzene to obtain N,N-bis(2-cyanoethyl)acrylamide having a melting point of 62.5 to 64°C. ε = 10 (at 1 kHz and 25°C in a polymer state).

### Synthesis Example 3

47 g of sodium acrylate, 78 g of 4-chlorobutylonitrile, 0.1 g of phenothiazine, 50 ml of xylene and 5 g of triethylamine were supplied into the same reactor as used in Synthesis Example 1 and reacted at 100°C for 5 hours. The reaction solution was cooled and added into 250 ml of a 0.2N acetic acid solution under stirring. The mixed solution was transferred into a separating funnel and extracted three times with 250 ml of benzene. Benzene and xylene were distilled off under reduced pressure from the organic layer, and the residue was further distilled under reduced pressure. 3-cyanopropyl acrylate was obtained at the distillation temperature of 90 - 92°C under 0.7 mmHg. ε = 10 (at 1 kHz and 25°C in a polymer state).

### Synthesis Example 4

174 g of diethylene glycol monomethacrylate, 265 g of acrylonitrile and 1.5 g of 2,6-di-t-butyl-p-cresol were supplied into the same reactor as used in Synthesis Example 2, followed by dropwise addition of 7.7 g of 1,8-diazabicyclo-(5,4,0)undece-7-ene into the solution under stirring. The solution was elevated in temperature to 40 - 50°C by self-exothermic reaction. The solution was stirred in the form as it was to carry out the reaction for 5 hours. The reaction mixture was neutralized with acetic acid and the excess acrylonitrile was distilled off under reduced pressure. The reaction solution was transferred into a separating funnel together with 100 ml of benzene and 400 ml of distilled water. The aqueous layer was removed and the residue was subjected to the same operation by adding 400 ml of distilled water. The organic layer was dried over anhydrous sodium sulfate and then benzene was distilled off under reduced pressure. There was obtained 2-(2-(2-cyanoethoxy)-ethoxy)ethyl methacrylate. ε = 21 (at 1 kHz and 25°C in a polymer state).

### Synthesis Example 5

146 g of 2,3-di-hydroxypropyl acrylate, 530 g of acrylonitrile and 1.5 g of 2,6-di-t-butyl-p-cresol were supplied into the same reactor as used in Synthesis Example 2, followed by dropwise addition of 7.7 g of 1,8-diazabicyclo(5,4,0)undece-7-ene into the solution under stirring. The solution was elevated in temperature to 40 - 50°C by self-exothermic reaction. The solution was stirred in the form as it was to carry out the reaction for 5 hours. The reaction mixture was neutralized with acetic acid and the excess acrylonitrile was distilled off under reduced pressure. The reaction solution was transferred into a separating funnel together with 100 ml of benzene and 400 ml of distilled water. The aqueous layer was removed and the residue was subjected to the same operation by adding 400 ml of distilled water. The organic layer was dried over anhydrous sodium sulfate and then benzene was distilled off under reduced pressure to give 2-hydroxy-3-(2-cyanoethoxy)-propyl acrylate. ε = 27 (at 1 kHz and 25°C in a polymer state).

### Synthesis Example 6

160 g of 2,3-di-hydroxypropyl methacrylate, 530 g of acrylonitrile and 1.5 g of 2,6-di-t-butyl-p-cresol were supplied into the same reactor as used in Synthesis Example 2, followed by dropwise addition of 7.7 g of 1,8-diazabicyclo(5,4,0)undece-7-ene into the solution under stirring. The solution was elevated in temperature to 40 - 50°C by self-exothermic reaction. The solution was stirred in the form as it was to carry out the reaction for 5 hours. The reaction mixture was neutralized with acetic acid and the excess acrylonitrile was distilled off under reduced pressure. The reaction solution was transferred into a separating funnel together with 100 ml of benzene and 400 ml of distilled water. The aqueous layer was removed and the residue was subjected to the same operation by adding 400 ml of distilled water. The organic layer was dried over anhydrous sodium sulfate and then benzene was distilled off under reduced pressure to obtain 2-hydroxy-3-(2-cyanoethoxy)-propyl methacrylate.
ε = 17 (at 1 kHz and 25°C in a polymer state).

## Claims

1. A phosphor paste suitable for forming a luminescent layer of a dispersion type electroluminescence element, which paste has a dielectric constant of not less than 10 at 1 kHz and 25°C after being solidified, and which comprises:
(1) a pulverized electroluminescent phosphor; and
(2) at least one compound solidifiable by radiation, said compound having a dielectric constant of not less than 10 at 1 kHz and 25°C after being solidified, the amount of the pulverized electroluminescent phosphor (1) being 150 to 800 parts by weight based on 100 parts by weight of the compound solidifiable by radiation (2), and wherein:
(A) the compound solidifiable by radiation is a compound (a) selected from a methacrylic ester derivative containing a cyanoalkyl group, an acrylic ester derivative containing a cyanoalkyl group, a methacrylic ester derivative containing a cyanoalkoxyalkyl group, an acrylic ester derivative containing a cyanoalkoxyalkyl group, a methacrylic acid amide derivative containing a cyanoalkyl group and an acrylic acid amide derivative containing a cyanoalkyl group; and the paste comprises
(3) 10 to 100% by weight, based on the compound solidifiable by radiation, of an organic high dielectric substance having a dielectric constant of not less than 10 at 1 kHz and 25°C selected from a cyanoethylated compound, fluoropolymer and nitrile compound; or
(B) the compound solidifiable by radiation is selected from 2-cyanoethyl (meth)acrylate, 3-cyanopropyl (meth)acrylate, 2-(2-cyanoethoxy)ethyl(meth)acrylate, 2-(2-(2-cyanoethoxy)ethoxy)ethyl(meth)acrylate, 2-hydroxy-3-(2-cyanoethoxy)propyl(meth)acrylate,N-N-bis(2-cyanoethyl) (meth)acrylamide and N-methylol-N-cyanoethyl (meth)acrylamide.

2. A phosphor paste according to claim 1, wherein said compound (2) solidifiable by radiation is a compound (a) selected from 2-cyanoethyl (meth)acrylate, 3-cyanopropyl (meth)acrylate,2-(2-cyanoethoxy)ethyl (meth)acrylate,2-(2-(2-cyanoethoxy)ethoxy)ethyl (meth)acrylate,2-hydroxy-3-(2-cyanoethoxy)propyl (meth)acrylate,N-N-bis(2-cyanoethyl) (meth)acrylamide and N-methylol-N-cyanoethyl (meth)acrylamide.

3. A phosphor paste according to claim 1 or 2, wherein said cyanoethylated compound is selected from a cyanoethylated ethylene-vinyl alcohol copolymer, cyanoethylated polyvinyl alcohol, cyanoethylated dihydroxypoval, cyanoethylated cellulose, cyanoethylated hydroxyalkyl cellulose, cyanoethylated hydroxyethyl cellulose, cyanoethylated pullulan, cyanoethylated dihydroxypullulan, cyanoethylated starch, cyanoethylated saccharose, cyanoethylated amylose, cyanoethylated sorbitol, cyanoethylated pentaerythritol, cyanoethylated mannitol, cyanoethylated methyl glucose, cyanoethylated trimethylolpropane, cyanoethylated glycerin, cyanoethylated diglycerin, cis-3,6-endomethylene- ⁴-tetrahydrophthalic acid dicyanoethyl ester and cyanoethylated thioglycol.

4. A phosphor paste according to claim 1 or 2, wherein said fluoropolymer is selected from a trifluoroethyl vinyl ether polymer, vinylidene fluoride-hexafluoropropylene co-polymer and polyvinylidene fluoride.

5. A phosphor paste according to claim 1 or 2, wherein said nitrile compound is selected from succinonitrile, butadiene-acrylonitrile rubber and phthalonitrile.

6. A phosphor paste according to any one of the preceding claims, which comprises an epoxy resin, polystyrene resin, nylon resin or glass spacer.

7. A dielectric paste suitable for forming an insulator layer of a dispersion type electroluminescence element, which paste has a dielectric constant of not less than 10 at 1 kHz and 25°C after being solidified and which comprises:
(i) at least one compound solidifiable by radiation, said compound having a dielectric constant of not less than 10 at 1 kHz and 25°C after being solidified, wherein:
(A) the compound solidifiable by radiation is a compound (a) selected from a methacrylic ester derivative containing a cyanoalkyl group, an acrylic ester derivative containing a cyanoalkyl group, a methacrylic ester derivative containing a cyanoalkoxyalkyl group, an acrylic ester derivative containing a cyanoalkoxyalkyl group, a methacrylic acid amide derivative containing a cyanoalkyl group or an acrylic acid amide derivative containing a cyanoalkyl group; and the paste comprises
(ii) 10 to 82.8% by weight, based on the weight of the paste composition, of at least one high dielectric substance having a dielectric constant of not less than 10 at 1 kHz and 25°C selected from a pulverized inorganic high dielectric substance which is barium titanium, lead titanate or strontium titanate, and an organic high dielectric substance which is a cyanoethylated compound, fluoropolymer or nitrile compound; or
(B) the compound solidifiable by radiation is selected from 2-cyanoethyl (meth)acrylate, 3-cyanopropyl (meth)acrylate,2-(2-cyanoethoxy)ethyl (meth)acrylate,2(2-(2-cyanoethoxy)ethoxy)ethyl(meth)acrylate,2-hydroxy-3-(2-cyanoethoxy)propyl (meth)acrylate,N-N-bis(2-cyanoethyl) (meth)acrylamide and N-methylol-N-cyanoethyl (meth)acrylamide.

8. A dielectric paste according to claim 7, wherein said compound (i) solidifiable by radiation is a compound (a) selected from 2-cyanoethyl (meth)acrylate, 3-cyanopropyl (meth)acrylate, 2-(2-cyanoethoxy)ethyl (meth)acrylate,2-(2-(2-cyanoethoxy)ethoxy)ethyl (meth)acrylate,2-hydroxy-3-(2-cyanoethoxy)propyl (meth) acrylate, N-N-bis(2-cyanoethyl) (meth)acrylamideand N-methylol-N-cyanoethyl (meth)acrylamide.

9. A dielectric paste according to claim 7 or 8, wherein said cyanoethylated compound is selected from cyanoethylated ethylene-vinyl alcohol copolymer, cyanoethylated polyvinyl alcohol, cyanoethylated dihydroxypoval, cyanoethylated cellulose, cyanoethylated hydroxyalkyl cellulose, cyanoethylated hydroxyethyl cellulose, cyanoethylated pullulan, cyanoethylated dihydroxypullulan, cyanoethylated starch, cyanoethylated saccharose, cyanoethylated amylose, cyanoethylated sorbitol, cyanoethylated pentaerythritol, cyanoethylated mannitol, cyanoethylated methyl glucose, cyanoethylated trimethylolpropane, cyanoethylated glycerin, cyanoethylated diglycerin, cis-3-6-endomethylene-Δ⁴-tetrahydrophthalic acid dicyanoethyl ester and cyanoethylated thioglycol.

10. A dielectric paste according to claim 7 or 8, wherein said fluoropolymer is selected from a trifluoroethyl vinyl ether polymer, vinylidene fluoride-hexafluoropropylene copolymer and polyvinylidene fluoride.

11. A dielectric paste according to claim 7 or 8, wherein said nitrile compound is selected from succinonitrile, butadieneacrylonitrile rubber and phthalonitrile.

12. A dielectric paste according to any one of claims 7 to 11 which contains a photosensitizer.

13. A process for producing a dispersion type electroluminescent element which comprises a luminescent layer and an insulator layer disposed between a transparent electrode and a back electrode, which process comprises forming a layer having a dielectric constant of not less than 10 at 1 kHz and 25°C when solidified from a high dielectric paste as defined in claim 7, applying a phosphor paste solidifiable by radiation thereto to form a phosphor paste layer, and solidifying the layers with radiation to form the luminescent layer and the insulator layer.

14. A process according to claim 13, wherein the high dielectric paste is a dielectric paste as defined in any one of claims 8 to 12 and the phosphor paste is as defined in any one of claims 1 to 6.

15. A process for producing a dispersion type electroluminescent element which comprises a luminescent layer disposed between a transparent electrode and a back electrode, which process comprises forming a phosphor paste layer from a phosphor paste as defined in any one of claims 1 to 6 and solidifying the layer with radiation to form the luminescent layer.

16. A process according to any one of claims 13 to 15, wherein the radiation is an electron beam or ultraviolet rays.

17. A process according to any one of claims 13 to 16, wherein the back electrode is transparent.

## Patentansprüche

1. Phosphorpaste, die zur Herstellung einer lumineszierenden Schicht eines Elektrolumineszenselements des Dispersion-Typs geeignet ist, wobei die Paste eine dielektrische Konstante von nicht weniger als 10 bei 1 kHz und 25°C nachdem sie verfestigt wurde, besitzt und enthält:
(1) pulverisierten elektrolumineszierenden Phosphor; und
(2) mindestens eine Verbindung, die durch Bestrahlung verfestigt werden kann, wobei die Verbindung eine dielektrische Konstante von nicht weniger als 10 bei 1 kHz und 25°C nachdem sie verfestigt wurde, besitzt, die Menge an pulverisiertem elektrolumineszierenden Phosphor (1) 150 bis 800 Gew.-Teile, bezogen auf 100 Gew.-Teile der Verbindung, die durch Bestrahlung verfestigt werden kann (2) beträgt und worin
(A) die Verbindung, die durch Bestrahlung verfestigt werden kann, eine Verbindung ist (a) ausgewählt aus einem Methacrylsäureesterderivat, das eine Cyanoalkylgruppe enthält, einem Acrylsäureesterderivat, das eine Cyanoalkylgruppe enthält, einem Methacrylsäureesterderivat, das eine Cyanoalkoxyalkylgruppe enthält, einem Acrylsäureesterderivat, das eine Cyanoalkoxyalkylgruppe enthält, einem Methacrylsäureamidderivat, das eine Cyanoalkylgruppe enthält, und einem Acrylsäureamidderivat, das eine Cyanoalkylgruppe enthält; und die Paste enthält
(3) 10 bis 100 Gew.-%, bezogen auf die Verbindung, die durch Bestrahlung verfestigt werden kann, einer organischen Substanz mit hoher Dielektrizitätskonstante mit einer dielektrischen Konstanten von nicht weniger als 10 bei 1 kHz und 25°C, ausgewählt aus einer cyanoethylierten Verbindung, einem Fluorpolymeren und einer Nitrilverbin-dung; oder
(B) die Verbindung, die durch Bestrahlung verfestigt werden kann, ausgewählt wird aus 2-Cyanoethyl(meth)-acrylat, 3-Cyanopropyl(meth)acrylat, 2-(2-Cyanoethoxy)ethyl(meth)acrylat, 2-(2-(2-Cyanoethoxy)ethoxy)-ethyl-(meth)acrylat,2-Hydroxy-3-(2-cyanoethoxy)propyl-(meth)acrylat, N,N-Bis-(2-cyanoethyl) (meth)acrylamid und N-Methylol-N-cyanoethyl(meth)acrylamid.

2. Phosphorpaste nach Anspruch 1, dadurch **gekennzeichnet**, daß die Verbindung (2), die durch Bestrahlung verfestigt werden kann, eine Verbindung ist (a) ausgewählt aus 2-Cyanoethyl(meth)acrylat, 3-Cyanopropyl(meth)acrylat, 2-(2-Cyanoethoxy)ethyl(meth)acrylat, 2-(2-(2-Cyanoethoxy)ethoxy)ethyl(meth)acrylat, 2-Hydroxy-3-(2-cyanoethoxy)propyl(meth)acrylat, N,N-Bis-(2-cyanoethyl)-(meth)acrylamid und N-Methylol-N-cyanoethyl(meth)acrylamid.

3. Phosphorpaste nach Anspruch 1 oder 2, dadurch **gekennzeichnet**, daß die cyanoethylierte Verbindung ausgewählt wird aus einem cyanoethylierten Ethylen-Vinylalkohol-Copolymeren, cyanoethyliertem Polyvinylalkohol, cyanoethyliertem Dihydroxypoval, cyanoethylierter Cellulose, cyanoethylierter Hydroxyalkylcellulose, cyanoethylierter Hydroxyethylcellulose, cyanoethyliertem Pullulan, cyanoethyliertem Dihydroxypullulan, cyanoethylierter Stärke, cyanoethylierter Saccharose, cyanoethylierter Amylose, cyanoethyliertem Sorbit, cyanoethyliertem Pentaerythrit, cyanoethyliertem Mannit, cyanoethylierter Methylglucose, cyanoethyliertem Trimethylolpropan, cyanoethyliertem Glycerin, cyanoethyliertem Diglycerin, cis-3,6-Endomethylen-Δ⁴-tetrahydrophthalsäuredicyanoethylester und cyanoethyliertem Thioglykol.

4. Phosphorpaste nach Anspruch 1 oder 2, dadurch **gekennzeichnet**, daß das Fluorpolymere ausgewählt wird aus einem Trifluorethylvinylether-Polymeren, einem Vinylidenfluorid-Hexafluorpropylen-Copolymeren und Polyvinylidenfluorid.

5. Phosphorpaste nach Anspruch 1 oder 2, dadurch **gekennzeichnet**, daß die Nitrilverbindung ausgewählt wird aus Succinonitril, Butadien-Acrylnitril-Kautschuk und Phthalonitril.

6. Phosphorpaste nach einem der vorhergehenden Ansprüche, dadurch **gekennzeichnet,** daß sie ein Epoxyharz, Polystyrolharz, Nylonharz oder einen Glasspacer enthält.

7. Dielektrische Paste, die zur Bildung einer Isolatorschicht eines Elektrolumineszenselementes des Dispersions-Typs geeignet ist, wobei die Paste eine dielektrische Konstante von nicht weniger als 10 bis 1 kHz und 25°C nach der Verfestigung besitzt und enthält:
(i) mindestens eine Verbindung, die durch Bestrahlung verfestigt werden kann, wobei die Verbindung eine dielektrische Konstante von nicht weniger als 10 bei 1 kHz und 25°C, nachdem sie verfestigt wurde, besitzt, worin:
(A) die Verbindung, die durch Bestrahlung verfestigt werden kann, eine Verbindung ist (a) ausgewählt aus einem Methacrylsäureesterderivat, das eine Cyanoalkylgruppe enthält, einem Acrylsäureesterderivat, das eine Cyanoalkylgruppe enthält, einem Methacrylsäureesterderivat, das eine Cyanoalkoxyalkylgruppe enthält, einem Acrylsäureesterderivat, das eine Cyanoalkoxyalkylgruppe enthält, einem Methacrylsäureamidderivat, das eine Cyanoalkylgruppe enthält, oder einem Acrylsäureamidderivat, das eine Cyanoalkylgruppe enthält; und die Paste enthält
(ii) 10 bis 82,8 Gew.-%, bezogen auf das Gewicht der Pastenzusammensetzung, mindestens einer Substanz mit hoher Dielektrizitätskonstante mit einer dielektrischen Konstante von nicht weniger als 10 bis 1 kHz und 25°C, ausgewählt aus einer pulverisierten anorganischen Substanz mit hoher Dielektrizitätskonstanten, welche Bariumtitan, Bleititanat oder Strontiumtitanat ist, und einer organischen Substanz mit hoher Dielektrizitätskonstante, welche eine cyanoethylierte Verbindung, ein Fluorpolymeres oder eine Nitrilverbindung ist; oder
(B) die Verbindung, die durch Bestrahlung verfestigt werden kann, ausgewählt wird aus 2-Cyanoethyl(meth)acrylat, 3-Cyanopropyl(meth)acrylat, 2-(2-Cyanoethoxy)ethyl(meth)acrylat, 2-(2-(2-Cyanoethoxy)ethoxy)ethyl(meth)acrylat, 2-Hydroxy-3-(2-cyanoethoxy)propyl(meth)acrylat, N,N-Bis-(2-cyanoethyl) (meth)acrylamidund N-Methylol-N-cyanoethyl(meth)acrylamid.

8. Dielektrische Paste nach Anspruch 7, dadurch **gekennzeichnet**, daß die Verbindung (i), die durch Bestrahlung verfestigt werden kann, eine Verbindung ist (a) ausgewählt aus 2-Cyanoethyl(meth)acrylat, 3-Cyano-propyl(meth)acrylat, 2-(2-Cyanoethoxy)ethyl(meth)acrylat, 2-(2-(2-Cyanoethoxy)ethoxy)ethyl(meth)acrylat, 2-Hydroxy-3-(2-cyanoethoxy)propyl(meth)acrylat, N,N-Bis-(2-cyanoethyl)(meth)acrylamidund N-Methylol-N-cyanoethyl(meth)acrylamid.

9. Dielektrische Paste nach Anspruch 7 oder 8, dadurch **gekennzeichnet,** daß die cyanoethylierte Verbindung ausgewählt wird aus einem cyanoethylierten Ethylen-Vinylalkohol-Copolymeren, cyanoethyliertem Polyvinylalkohol, cyanoethyliertem Dihydroxypoval, cyanoethylierter Cellulose, cyanoethylierter Hydroxyalkylcellulose, cyanoethylierter Hydroxyethylcellulose, cyanoethyliertem Pullulan, cyanoethyliertem Dihydroxypullulan, cyanoethylierter Stärke, cyanoethylierter Saccharose, cyanoethylierter Amylose, cyanoethyliertem Sorbit, cyanoethyliertem Pentaerythrit, cyanoethyliertem Mannit, cyanoethylierter Methylglucose, cyanoethyliertem Trimethylolpropan, cyanoethyliertem Glycerin, cyanoethyliertem Diglycerin, cis-3,6-Endomethylen-Δ⁴-tetrahydrophthalsäuredicyanoethylester und cyanoethyliertem Thioglykol.

10. Dielektrische Paste nach Anspruch 7 oder 8, dadurch **gekennzeichnet,** daß das Fluorpolymere ausgewählt wird aus einem Trifluorethylvinylether-Polymeren, einem Vinylidenfluorid-Hexafluorpropylen-Copolymeren und Polyvinylidenfluorid.

11. Dielektrische Paste nach Anspruch 7 oder 8, dadurch **gekennzeichnet,** daß die Nitrilverbindung ausgewählt wird aus Succinonitril, Butadien-Acrylnitril-Kautschuk und Phthalonitril.

12. Dielektrische Paste nach einem der Ansprüche 7 bis 11, dadurch **gekennzeichnet,** daß sie einen Photosensibilisator enthält.

13. Verfahren zur Herstellung eines elektrolumineszierenden Elements des Dispersions-Typs, welches eine lumineszierende Schicht und eine Isolatorschicht, angebracht zwischen einer transparenten Elektrode und einer Rückelektrode, umfaßt, durch Bildung einer Schicht mit einer Dielektrizitätskonstanten von nicht weniger als 10 bei 1 kHz und 25°C nach der Verfestigung aus einer Paste mit hoher Dielektrizitätskonstanten, wie in Anspruch 7 definiert, Anwendung einer Phosphorpaste, die durch Bestrahlung verfestigt werden kann unter Bildung einer Phosphorpastenschicht und Verfestigung der Schichten mit Bestrahlung unter Bildung der lumineszierenden Schicht und der Isolatorschicht.

14. Verfahren nach Anspruch 13, dadurch **gekennzeichnet,** daß die Paste mit hoher Dielektrizitätskonstante eine dielektrische Paste ist, wie sie in einem der Ansprüche 8 bis 12 definiert wurde, und daß die Phosphorpaste eine Paste ist, wie sie in einem der Ansprüche 1 bis 6 definiert wurde.

15. Verfahren zur Herstellung eines elektrolumineszierenden Elements des Dispersions-Typs, das eine lumineszierende Schicht, angebracht zwischen einer transparenten Elektrode und einer Rückelektrode, umfaßt, durch Bildung einer Phosphorpastenschicht aus einer Phosphorpaste, wie sie in einem der Ansprüche 1 bis 6 definiert wurde und Verfestigung der Schicht durch Bestrahlung unter Bildung der lumineszierenden Schicht.

16. Verfahren nach einem der Ansprüche 13 bis 15, dadurch **gekennzeichnet,** daß die Bestrahlung mit einem Elektronenstrahl oder mit ultravioletten Strahlen erfolgt.

17. Verfahren nach einem der Ansprüche 13 bis 16, dadurch **gekennzeichnet,** daß die Rückelektrode transparent ist.

## Revendications

1. Pâte luminescente appropriée pour former une couche luminescente d'un élément électroluminescent du type à dispersion, cette pâte ayant une constante diélectrique non supérieure à 10, à 1 kHz et à 25 °C après avoir été solidifiée, et comprenant :
(1) une matière électroluminescente pulvérisée ; et
(2) au moins un composé solidifiable par irradiation, ce composé ayant une constante diélectrique non inférieure à 10, à 1 kHz et à 25 °C après avoir été solidifié, la quantité de la matière électroluminescente pulvérisée (1) étant de 150 à 800 parties en poids pour 100 parties en poids du composé solidifiable par irradiation (2), et :
(A) le composé solidifiable par irradiation étant un composé (a) choisi parmi un dérivé d'ester méthacrylique contenant un groupe cyanoalkyle, un dérivé d'ester acrylique contenant un groupe cyanoalkyle, un dérivé d'ester méthacrylique contenant un groupe cyanoalkoxyalkyle, un dérivé d'ester acrylique contenant un groupe cyanoalkoxyalkyle, un dérivé d'amide d'acide méthacrylique contenant un groupe cyanoalkyle et un dérivé d'amide d'acide acrylique contenant un groupe cyanoalkyle ; et la pâte comprenant :
(3) de 10 à 100 % en poids par rapport au composé solidifiable par irradiation, d'une substance organique fortement diélectrique ayant une constante diélectrique non inférieure à 10, à 1 kHz et à 25 °C, choisie parmi un composé cyanoéthylé, un polymère fluoré et un composé de type nitrile ; ou
(B) le composé solidifiable par irradiation étant choisi parmi le (méth)acrylate de 2-cyanoéthyle, le (méth)acrylate de 3-cyanopropyle, le (méth)acrylate de 2-(2-cyanoéthoxy)éthyle, le (méth)acrylate de 2-(2-(2-cyanoéthoxy)éthoxy)éthyle, le (méth)acrylate de 2-hydroxy-3-(2-cyanoéthoxy)propyle, le N-N-bis(2-cyanoéthyl)(méth)acrylamide et le N-méthylol-N-cyanoéthyl (méth)acrylamide.

2. Pâte luminescente selon la revendication 1, dans laquelle ledit composé (2) solidifiable par irradiation, est un composé (a) choisi parmi le (méth)acrylate de 2-cyanoéthyle, le (méth)acrylate de 3-cyanopropyle, le (méth)acrylate de 2-(2-cyanoéthoxy)éthyle, le (méth)acrylate de 2-(2-(2-cyanoéthoxy)éthoxy)éthyle, le (méth)acrylate de 2-hydroxy-3-(2-cyanoéthoxy)propyle, le N-N-bis(2-cyanoéthyl) (méth)acrylamide et le N-méthylol-N-cyanoéthyl (méth)acrylamide.

3. Pâte luminescente selon la revendication 1 ou 2, dans laquelle ledit composé cyanoéthylé est choisi parmi un copolymère d'éthylène et d'alcool vinylique cyanoéthylé, un poly(alcool vinylique) cyanoéthylé, le dihydroxypoval cyanoéthylé, la cellulose cyanoéthylée, l'hydroxyalkyl cellulose cyanoéthylée, l'hydroxyéthyl cellulose cyanoéthylée, le pullulane cyanoéthylé, le dihydroxypullulane cyanoéthylé, l'amidon cyanoéthylé, le saccharose cyanoéthylé, l'amylose cyanoéthylé, le sorbitol cyanoéthylé, le pentaérythritol cyanoéthylé, le mannitol cyanoéthylé, le méthyl glucose cyanoéthylé, le triméthylolpropane cyanoéthylé, la glycérine cyanoéthylée, la diglycérine cyanoéthylée, l'ester dicyanoéthylique de l'acide cis-3,6-endométhylène-Δ⁴-tétrahydrophtalique et le thioglycol cyanoéthylé.

4. Pâte luminescente selon la revendication 1 ou 2, dans laquelle ledit polymère fluoré est choisi parmi un polymère d'éther de vinyle et de trifluoroéthyle, un copolymère de fluorure de vinylidène et d'hexafluoropropylène et le polyfluorure de vinylidène.

5. Pâte luminescente selon la revendication 1 ou 2, dans laquelle ledit composé de type nitrile est choisi parmi le succinonitrile, un caoutchouc de butadiène et d'acrylonitrile et le phtalonitrile.

6. Pâte luminescente selon l'une quelconque des revendications précédentes, comprenant une charge à base de résine époxy, de résine de polystyrène, de résine de Nylon ou de verre.

7. Pâte diélectrique appropriée pour former une couche isolante d'un élément électroluminescent du type à dispersion, cette pâte ayant une constante diélectrique non inférieure à 10, à 1 kHz et à 25 °C après avoir été solidifiée, et comprenant :
(i) au moins un composé solidifiable par irradiation, ce composé ayant une constante diélectrique non inférieure à 10, à 1 kHz et à 25 °C après avoir été solidifié,
(A) le composé solidifiable par irradiation étant un composé (a) choisi parmi un dérivé d'ester méthacrylique contenant un groupe cyanoalkyle, un dérivé d'ester acrylique contenant un groupe cyanoalkyle, un dérivé d'ester méthacrylique contenant un groupe cyanoalkoxyalkyle, un dérivé d'ester acrylique contenant un groupe cyanoalkoxyalkyle, un dérivé d'amide d'acide méthacrylique contenant un groupe cyanoalkyle et un dérivé d'amide d'acide acrylique contenant un groupe cyanoalkyle ; et la pâte comprenant :
(ii) de 10 à 82,8 % en poids par rapport au poids de la composition de pâte, d'au moins une substance fortement diélectrique ayant une constante diélectrique non inférieure à 10, à 1 kHz et à 25 °C, choisie parmi une substance inorganique fortement diélectrique telle que le titanate de baryum, le titanate de plomb ou le titanate de strontium, et une substance organique fortement diélectrique consistant en un composé cyanoéthylé, en un polymère fluoré ou en un composé de type nitrile ; ou
(B) le composé solidifiable par irradiation étant choisi parmi le (méth)acrylate de 2-cyanoéthyle, le (méth)acrylate de 3-cyanopropyle, le (méth)acrylate de 2-(2-cyanoéthoxy)éthyle, le (méth)acrylate de 2-(2-(2-cyanoéthoxy)éthoxy)éthyle, le (méth)acrylate de 2-hydroxy-3-(2-cyanoéthoxy)propyle, le N-N-bis(2-cyanoéthyl)(méth)acrylamide et le N-méthylol-N-cyanoéthyl (méth)acrylamide.

8. Pâte diélectrique selon la revendication 7, dans laquelle ledit composé (i) solidifiable par irradiation est un composé (a) choisi parmi le (méth)acrylate de 2-cyanoéthyle, le (méth)acrylate de 3-cyanopropyle, le (méth)acrylate de 2-(2-cyanoéthoxy)éthyle, le (méth)acrylate de 2-(2-(2-cyanoéthoxy)éthoxy)éthyle, le (méth)acrylate de 2-hydroxy-3-(2-cyanoéthoxy)propyle, le N-N-bis(2-cyanoéthyl) (méth)acrylamide et le N-méthylol-N-cyanoéthyl (méth)acrylamide.

9. Pâte diélectrique selon la revendication 7 ou 8, dans laquelle ledit composé cyanoéthylé est choisi parmi un copolymère d'éthylène et d'alcool vinylique cyanoéthylé, un poly(alcool vinylique) cyanoéthylé, le dihydroxypoval cyanoéthylé, la cellulose cyanoéthylée, une hydroxyalkyl cellulose cyanoéthylée, l'hydroxyéthyl cellulose cyanoéthylée, le pullulane cyanoéthylé, le dihydroxypullulane cyanoéthylé, l'amidon cyanoéthylé, le saccharose cyanoéthylé, l'amylose cyanoéthylée, le sorbitol cyanoéthylé, le pentaérythritol cyanoéthylé, le mannitol cyanoéthylé, le méthyl glucose cyanoéthylé, le triméthylolpropane cyanoéthylé, la glycérine cyanoéthylée, la diglycérine cyanoéthylée, l'ester dicyanoéthylique de l'acide cis-3-6-endométhylène-Δ⁴-tétrahydrophtalique et le thioglycol cyanoéthylé.

10. Pâte diélectrique selon la revendication 7 ou 8, dans laquelle le polymère fluoré est choisi parmi un polymère d'éther de trifluoroéthyle et de vinyle, un copolymère de fluorure de vinylidène et d'hexafluoropropylène et le fluorure de polyvinylidène.

11. Pâte diélectrique selon la revendication 7 ou 8, dans laquelle ledit composé de type nitrile est choisi parmi le succinonitrile, un caoutchouc de butadiène et d'acrylonitrile, et le phtalonitrile.

12. Pâte diélectrique selon l'une quelconque des revendications 7 à 11, contenant un photosensibilisant.

13. Procédé de production d'un élément électroluminescent du type à dispersion, comprenant une couche luminescente et une couche isolante disposées entre une électrode transparente et une électrode de fond, selon lequel on forme une couche ayant une constante diélectrique non inférieure à 10, à 1 kHz et à 25 °C lorsqu'elle est solidifiée, à partir d'une pâte fortement diélectrique telle que définie dans la revendication 7, on applique sur celle-ci une pâte luminescente solidifiable par irradiation, afin de former une couche de pâte luminescente, et on solidifie les couches par irradiation afin de former la couche luminescente et la couche isolante.

14. Procédé selon la revendication 13, dans lequel la pâte fortement diélectrique est une pâte diélectrique telle que définie dans l'une quelconque des revendications 8 à 12, et la pâte luminescente est telle que définie dans l'une quelconque des revendications 1 à 6.

15. Procédé de production d'un élément électroluminescent du type à dispersion, comprenant une couche luminescente disposée entre une électrode transparente et une électrode de fond, selon lequel on forme une couche de pâte luminescente à partir d'une pâte luminescente telle que définie dans l'une quelconque des revendications 1 à 6, et on solidifie la couche par irradiation afin de former la couche luminescente.

16. Procédé selon l'une quelconque des revendications 13 à 15, dans lequel l'irradiation est effectuée par un faisceau d'électrons ou des rayons ultraviolets.

17. Procédé selon l'une quelconque des revendications 13 à 16, dans lequel l'électrode de fond est transparente.
